(19) Europäisches Patentamt
European Patent Office
Office européen des brevets

(11) **EP 4 530 035 A1**

(12) **EUROPEAN PATENT APPLICATION**

(43) Date of publication:
**02.04.2025 Bulletin 2025/14**

(21) Application number: **24192610.4**

(22) Date of filing: **02.08.2024**

(51) International Patent Classification (IPC):
**B25J 15/08** *(2006.01)* **B41J 3/407** *(2006.01)*

(52) Cooperative Patent Classification (CPC):
**B41J 3/4078; B25J 11/00; B25J 15/0019**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.09.2023 JP 2023170157**
**06.10.2023 JP 2023174016**

(71) Applicant: **Brother Kogyo Kabushiki Kaisha**
**Nagoya Aichi 467-8561 (JP)**

(72) Inventor: **ICHIKAWA, Hiroshi**
**Nagoya, 467-8562 (JP)**

(74) Representative: **J A Kemp LLP**
**80 Turnmill Street**
**London EC1M 5QU (GB)**

(54) **REMOVAL DEVICE AND PRINT SYSTEM**

(57) A removal device (20) removes a medium (T) from a platen (84). The removal device (20) includes a first support portion (2), a second support portion (3), and a connecting portion (4). The first support portion (2) is positioned on an opposite side from the platen (84) in a first direction. The second support portion (3) includes a second contact portion (6B, 7B). The second contact portion (6B, 7B) is configured to move in a third direction. The connecting portion (4) is positioned on the opposite side from the platen (84) with respect to the first support portion (2) and the second support portion (3) in the third direction. The connecting portion (4) is configured to connect the first support portion (2) and the second support portion (3) with each other.

FIG. 1

EP 4 530 035 A1

**Description**

Background Art

The present invention relates to a removal device that removes a medium from a platen, and a print system provided with the removal device.

A print system is known that performs printing on a medium, such as a cloth or the like, held by a platen. A device is proposed for automatically performing an operation to remove the printed medium from the platen. In JP 2020-110874 A, a technique is disclosed for performing an operation of folding and stacking T-shirts using a robot arm provided on a robot.

Summary

A robot hand of the robot arm normally grips a target object between a plurality of fingers. When it is attempted to remove a medium held on a platen using the robot hand, it is necessary for the robot hand to grip an excess section, of the medium, that is not mounted to the platen, using the plurality of fingers. Thus, when the excess section is not formed in the medium, there is a possibility that the robot arm may fail to remove the medium from the platen.

An object of the present invention is to provide a removal device for realizing an operation of removing a medium from a platen even when the excess section is not formed in the medium, and a print system provided with the removal device.

Various embodiments herein provide a first aspect of a removal device configured to remove a medium from a platen. The medium includes a first layer and a second layer. The first layer and the second layer connect with each other at one end of the medium and are separate from each other at the other end of the medium. During the medium being set on the platen, the first layer is over a first surface of the platen, the second layer is under a second surface of the platen, the one end of the medium is at a front end of the platen, and the other end of the medium is at a back end of the platen, respectively. The removal device includes a first support portion and a second support portion. The first support portion is configured to contact one of the first layer and the second layer of the medium. The second support portion includes a second contact portion. The second contact portion is configured to contact the other of the first layer and the second layer of the medium. The second contact portion includes a rotary body. The second contact portion is configured to move to the other of the first layer and the second layer of the medium. The second contact portion is configured to move in a forward direction in a state that the first support portion contacts the one of the first layer and the second layer of the medium and the rotary body of the second contact portion contacts the other of the first layer and the second layer of the medium.

The removal device of the first aspect may further include a connecting portion positioned in front of the platen, and connecting the first support portion and the second support portion with each other. The second support portion may include a link mechanism. The link mechanism may include a first joint and a second joint. One end of the first joint may be connected to the connecting portion. One end of the second joint may be connected to another end of the first joint. The rotary body may be provided at another end of the second joint. The removal device may further include a rotary mechanism configured to rotate the first joint with respect to the connecting portion.

Various embodiments also provide a second aspect of a removal device that removes a medium from a platen. The medium includes a first section, a second section, and a third section. The first section extends along a first surface being an end surface of the platen in a first direction. The second section extends along a second surface being an end surface of the platen in a second direction opposite to the first direction. The third section joins the first section and the second section and is folded back at an end portion of the platen in a third direction orthogonal to the first direction and the second direction. The removal device includes a first support portion, a second support portion, and a connecting portion. The first support portion is positioned on an opposite side from the platen with respect to the first section of the medium in the first direction. The second support portion includes a second contact portion. The second contact portion is configured to move in the third direction, and coming into contact with a second opposite surface of the second section of the medium. The second opposite surface is on the opposite side to a second facing surface of the second section of the medium. The second facing surface faces the second surface of the platen. The connecting portion is positioned on the opposite side from the platen with respect to the first support portion and the second support portion in the third direction. The connecting portion is configured to connect the first support portion and the second support portion with each other.

In the removal device of the second aspect, the second contact portion of the second support portion may move in the third direction in a state of contact with the second section of the medium. The first support portion may come into contact with a first opposite surface of the first section of the medium. The first opposite surface may be on the opposite side to a first facing surface of the first section of the medium. The first facing surface may face the first surface of the platen.

In the removal device of the second aspect, the second contact portion may include a rotary body configured to rotate centered on a rotary shaft orthogonal to the first direction, the second direction, and the third direction.

In the removal device of the second aspect, the second support portion may include a link mechanism. The link mechanism may include a first joint and a second joint. One end of the first joint may be connected to the connecting portion. One end of the second joint may be connected to another end of the first joint. The rotary body may be provided at another end of the second joint. The removal device may further include a rotary mechanism configured to rotate the first joint with respect to the connecting portion.

The removal device of the second aspect may further include a spring configured to urge the rotary body toward the platen.

In the removal device of the second aspect, the rotary body may include a one-way clutch. The one-way clutch may be configured to allow the rotary body to rotate in a first rotation direction and not allow the rotary body to rotate in a second rotation direction. The first rotation direction may be a rotation direction in which a contact section of the rotary body with the medium moves in the third direction. The second rotation direction may be opposite to the first rotation direction.

In the removal device of the second aspect, the second support portion may include a first shaft. The rotary mechanism may include a shaft support member and a movement mechanism. The shaft may be configured to support the first shaft. The movement mechanism may be configured to move the shaft support member in the first direction and the second direction. The second support portion may be configured to rotate around a second shaft separated from the first shaft, as a result of the shaft support member moving in the first direction and the second direction.

In the removal device of the second aspect, the rotary mechanism may include a first motor.

The removal device of the second aspect may further include a second motor configured to rotate the second joint with respect to the first joint.

In the removal device of the second aspect, the first support portion may include a plate body including a third surface facing the first section of the medium.

In the removal device of the second aspect, the third surface may be inclined with respect to a direction parallel to the first surface.

In the removal device of the second aspect, the second contact portion may be made of rubber, and the third surface may be made of rubber.

In the removal device of the second aspect, the second support portion may include a link mechanism. The link mechanism may include a first joint and a second joint. One end of the first joint may be connected to the connecting portion. One end of the second joint may be connected to another end of the first joint. The rotary body may be provided at another end of the second joint. The removal device may further include a rotary mechanism configured to rotate the first joint with respect to the connecting portion. When the first joint is rotated by the rotary mechanism, a movement trajectory of a connection section between the first joint and the second joint may pass farther to an opposite side of the first section of the medium in the first direction than a virtual plane extending along the third surface of the first support portion.

The removal device of the first and the second aspect removes the medium from the platen by moving the second contact portion in the third direction in a state of the second section of the medium being caused to be in contact with the second contact portion of the second support portion. In this case, the removal device contributes to removing the medium from the platen even when an excess section is not formed in the medium.

Various embodiments also provide a third aspect of a print system that includes a platen and a removal device. The removal device removes a medium from a platen. The medium includes a first section, a second section, and a third section. The first section extends along a first surface being an end surface of the platen in a first direction. The second section extends along a second surface being an end surface of the platen in a second direction opposite to the first direction. The third section joins the first section and the second section and is folded back at an end portion of the platen in a third direction orthogonal to the first direction and the second direction. The removal device includes a first support portion, a second support portion, and a connecting portion. The first support portion is positioned on an opposite side from the platen with respect to the first section of the medium in the first direction. The second support portion includes a second contact portion. The second contact portion is configured to move in the third direction, and coming into contact with a second opposite surface of the second section of the medium. The second opposite surface is on the opposite side to a second facing surface of the second section of the medium. The second facing surface faces the second surface of the platen. The connecting portion is positioned on the opposite side from the platen with respect to the first support portion and the second support portion in the third direction. The connecting portion is configured to connect the first support portion and the second support portion with each other.

The print system of the third aspect may further include a head configured to print by ejecting ink onto the medium held on the platen.

In the print system of the third aspect, the second support portion may include a rotary body configured to rotate centered on a rotary shaft orthogonal to the first direction, the second direction, and the third direction. The second support portion may include a link mechanism. The link mechanism may include a first joint and a second joint. One end of the first joint may be connected to the connecting portion. One end of the second joint may be connected to another end of the first joint. The rotary body may be provided at another end of the second joint. The print system may further include a rotary mechanism configured to rotate the first joint with respect to the connecting portion.

The print system of the third aspect may further include a spring configured to urge the rotary body toward the platen.

In the print system of the third aspect, the rotary body may include a one-way clutch. The one-way clutch may be configured to allow the rotary body to rotate in a first rotation direction and not allow the rotary body to rotate in a second rotation direction. The first rotation direction may be a rotation direction in which a contact section of the rotary body with the medium moves in the third direction. The second rotation direction may be opposite to the first rotation direction.

In the print system of the third aspect, the first support portion may include a plate body including a third surface facing the first section of the medium. The third surface may be inclined with respect to a direction parallel to the first surface.

In the print system of the third aspect, the removal device may be configured to move relative to the platen in a direction close to the platen and in a direction away from the platen.

Brief Description of Drawings

FIG. 1 is a diagram showing an overview of a print system 1.
FIG. 2 is a perspective view of a removal device 20 and a platen unit 8.
FIG. 3 is a perspective view of the removal device 20.
FIG. 4 is a plan view of the removal device 20.
FIG. 5 is a cross-sectional view as seen in a direction of arrows along a line I-I shown in FIG. 4.
FIG. 6 is a diagram showing a first step of removing a cloth T from a platen 84.
FIG. 7 is a diagram showing a second step of removing the cloth T from the platen 84.
FIG. 8 is a diagram showing a third step of removing the cloth T from the platen 84.
FIG. 9 is a diagram showing a fourth step of removing the cloth T from the platen 84.
FIG. 10 is a diagram showing a fifth step of removing the cloth T from the platen 84.
FIG. 11 is a diagram showing a sixth step of removing the cloth T from the platen 84.
FIG. 12 is a diagram showing a seventh step of removing the cloth T from the platen 84.
FIG. 13 is an explanatory diagram for describing relationships between forces acting on the removal device 20.
FIG. 14 is an explanatory diagram for describing the relationships between forces acting on the removal device 20.
FIG. 15 is a right side view of the removal device 20 including a first motor 15, a second motor 16A, and a third motor 17A.

Description of Embodiments

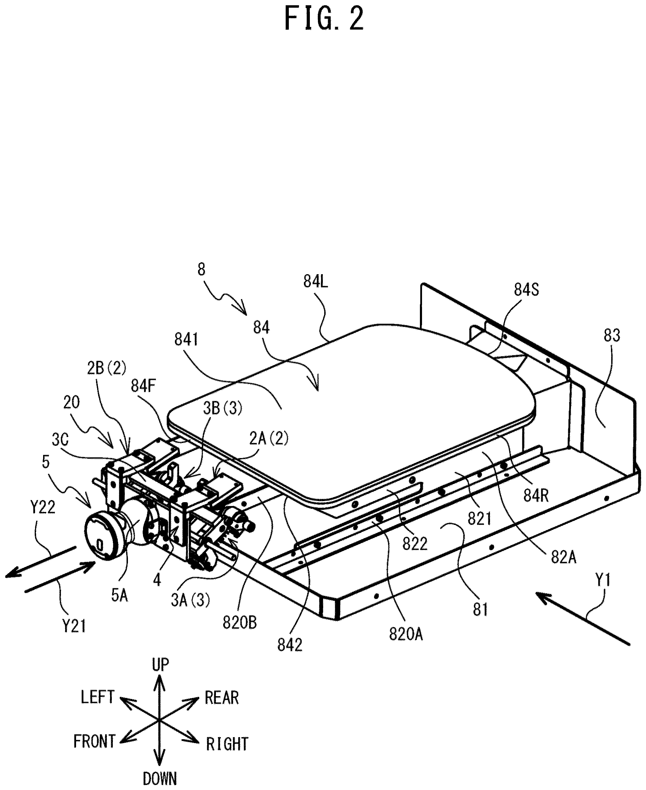

An embodiment of a print system 1 according to the present invention will be described with reference to the drawings. The referenced drawings are used to illustrate technological features that can be adopted by the present invention. Illustrated configurations of devices and the like are not intended to limit the present invention to the embodiment alone, and are simply explanatory examples. An upward direction, a downward direction, a lower left direction, an upper right direction, an upper left direction, and a lower right direction in FIG. 2 are, respectively, an upward direction, a downward direction, a front direction, a rear direction, a left direction, and a right direction of a removal device 20 and a platen unit 8.

Overview of print system 1

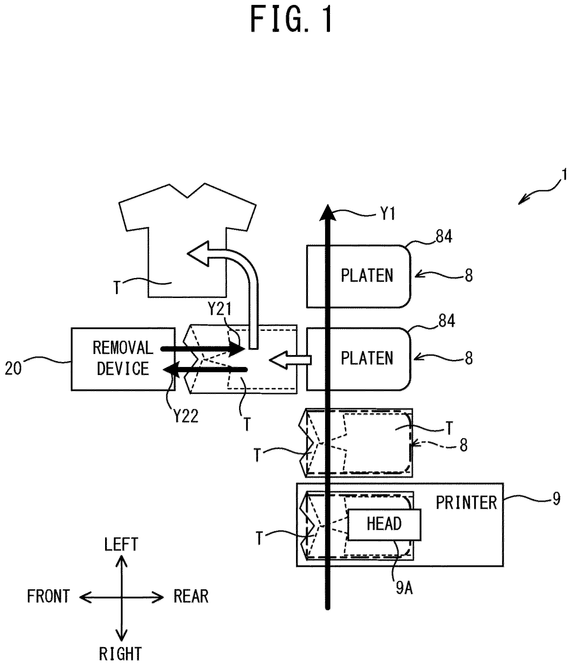

As shown in FIG. 1, the print system 1 is provided with the removal device 20, the platen unit 8, and a printer 9. The platen unit 8 is conveyed in a state of a cloth T being held on a platen 84. A type of the cloth T is not particularly limited. In the present embodiment, the cloth T is a T-shirt. The platen unit 8 is conveyed in a conveyance direction Y1. The printer 9 is provided at a part of a conveyance path of the platen unit 8. The printer 9 is provided with a head 9A that discharges ink. The printer 9 performs printing on the cloth T by discharging the ink from the head 9A onto the cloth T held by the platen 84. The removal device 20 is positioned downstream of the printer 9 in the conveyance direction Y1, on the conveyance path of the platen unit 8. The removal device 20 moves in an approaching direction Y21, which is a direction from a position separated from the conveyance path of the platen unit 8 toward a position close to the conveyance path, and in a separating direction Y22, which is a direction from the position close to the conveyance path of the platen unit 8 toward the position separated from the conveyance path. The removal device 20 removes the cloth T, on which the printing by the printer 9 has been performed, from the platen 84.

Platen unit 8

As shown in FIG. 2, the direction of the conveyance direction Y1 of the platen unit 8 coincides with a direction to the left. The platen unit 8 is provided with a base 81, a right surface plate 82A, a left surface plate, a rear surface plate 83, and the platen 84.

The shape of the base 81 is a rectangular shape in a plan view. A right support portion 820A and a left support portion 820B are fixed to the upper surface of the base 81. The right support portion 820A and the left support portion 820B are separated from each other in the left-right direction. The right support portion 820A is positioned to the right of the left support portion 820B.

The right surface plate 82A has a plate shape and is orthogonal to the left-right direction. The right surface plate 82A includes a first extension portion 821 and a second extension portion 822. The first extension portion 821 extends upward from a portion of the right support portion 820A further to the rear than a substantial center thereof in the front-rear direction. The second extension portion 822 extends to the front from a front end portion of the first extension portion 821 and from a position separated upward from a lower end portion of the first extension portion 821. The base 81 and the second extension portion 822 are separated from each other in the up-down direction. The left surface plate has the same shape as the right surface plate 82A. A first extension portion of the left surface plate extends upward from a portion of the left support portion 820B further to the rear than a substantial center thereof in the front-rear direction. A second extension portion of the left surface plate is separated upward from the base 81. The right surface plate 82A and the left surface plate are separated from each other in the left-right direction. The rear surface plate 83 has a plate shape and extends upward from a rear end portion of the base 81.

The platen 84 has a plate shape. In a plan view, the shape of the platen 84 is a substantially rectangular shape that is long in the front-rear direction. The platen 84 includes an upper surface 841 and a lower surface 842. The upper surface 841 is an end surface of the platen 84 in the upward direction. The lower surface 842 is an end surface of the platen 84 in the downward direction. The upper surface 841 and the lower surface 842 extend horizontally, and are orthogonal to the up-down direction. Respective upper end portions of the second extension portion 822 of the right surface plate 82A and the second extension portion of the left surface plate are fixed to the lower surface 842 of the platen 84. An end portion at the front of the platen 84 will be referred to as a "front end section 84F". An end portion on the right of the platen 84 will be referred to as a "right end section 84R". An end portion on the left of the platen 84 will be referred to as a "left end section 84L". An end portion at the rear of the platen 84 will be referred to as a "rear end section 84S". The front end section 84F, the right end section 84R, the left end section 84L, and the rear end section 84S extend in the up-down direction between the upper surface 841 and the lower surface 842, and join the upper surface 841 with the lower surface 842. Each of the front end section 84F, the right end section 84R, and the left end section 84L extend linearly. The rear end section 84S extends while curving.

The cloth T, such as the T-shirt or the like, is attached to the platen 84. When the cloth T is attached to the platen 84, a neck portion of the cloth T is positioned at the front end section 84F of the platen 84. The cloth T is in a state in which a section corresponding to the front end section 84F of the platen 84 is folded back. A hem section of the cloth T is positioned at the rear end section 84S.

When mounting the cloth T to the platen 84, the cloth T is stretched to the rear, to the left, and to the right such that the cloth T is not slack with respect to the upper surface 841 of the platen 84. A section around the neck of the cloth T is closely attached to the front end section 84F of the platen 84. A section of the cloth T from the right sleeve to the hem is folded back at the right end section 84R of the platen 84, and is fed between the lower surface 842 of the platen 84 and the second extension portion 822 of the right surface plate 82A. A section of the cloth T from the left sleeve to the hem is folded back at the left end section 84L of the platen 84, and is fed between the lower surface 842 of the platen 84 and the second extension portion of the left surface plate.

Removal device 20

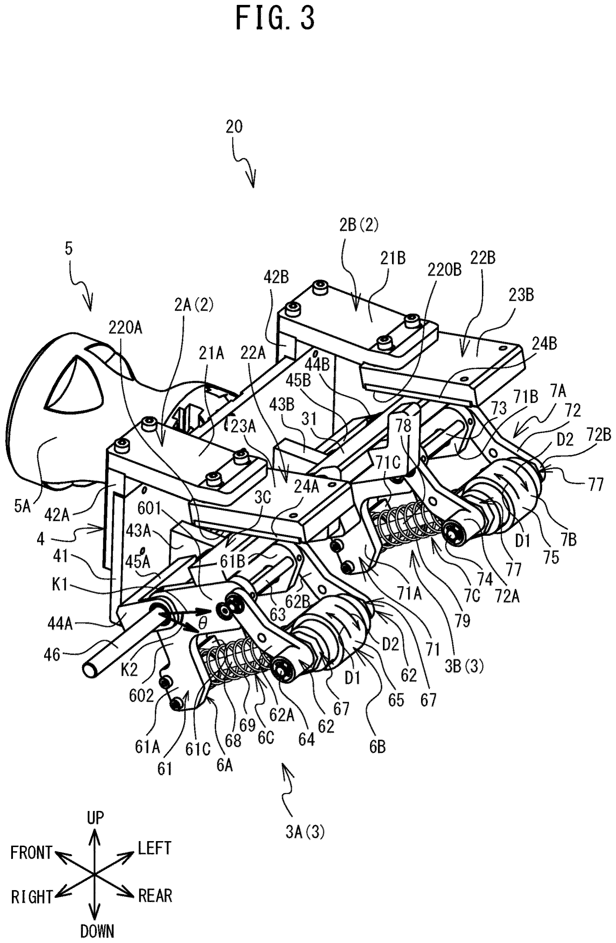

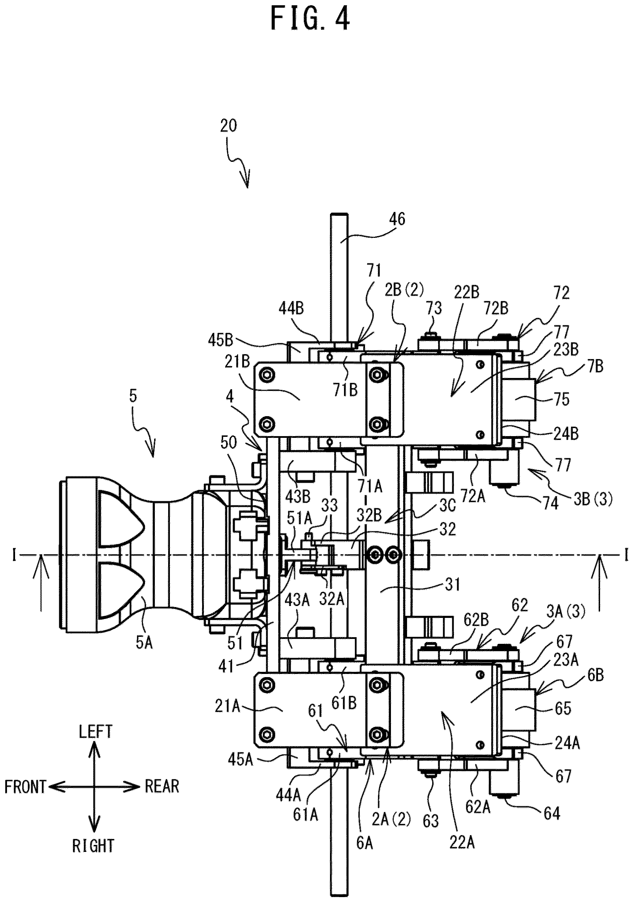

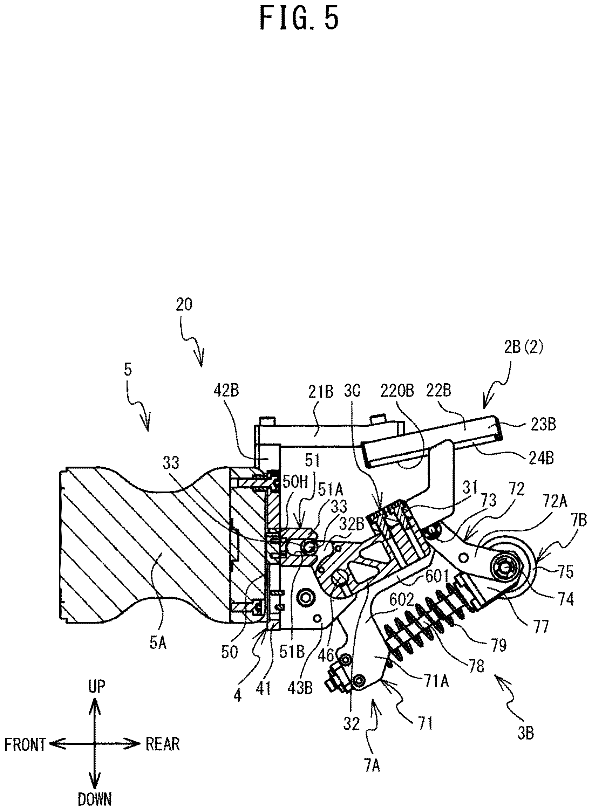

The approaching direction Y21 in which the removal device 20 moves from the position separated from the conveyance path of the platen unit 8 toward the position close to the conveyance path coincides with the direction to the rear. The separating direction Y22 in which the removal device 20 moves from the position close to the conveyance path of the platen unit 8 toward the position separated from the conveyance path coincides with the direction to the front. As shown in FIG. 3 to FIG. 5, the removal device 20 is provided with a first support portion 2, a second support portion 3, a connecting portion 4, and a rotating mechanism 5.

Rotating mechanism 5

The rotating mechanism 5 includes an end effector 5A connected to a robot arm. The robot arm is a vertical articulated robot, and includes links and joints. The end effector 5A is attached to a leading end of the robot arm. A flat surface portion 50, which is orthogonal to the front-rear direction, is formed at a rear end portion of the end effector 5A. The end effector 5A supports a pawl unit 51 that protrudes to the rear from the flat surface portion 50. The pawl unit 51 includes a pawl 51A. The pawl 51A has a U-shaped groove 51B.

The robot arm moves the end effector 5A in at least the front-rear direction or the up-down direction. Further, the end effector 5A moves the pawl unit 51 in the up-down direction.

Connecting portion 4

The connecting portion 4 is connected to the end effector 5A. The connecting portion 4 moves in the front-rear direction or the up-down direction in accordance with the robot arm moving the end effector 5A. Further, the connecting portion 4 is provided to the front of the first support portion 2 and the second support portion 3 to be described later, and connects the first support portion 2 and the second support portion 3.

The connecting portion 4 includes a base portion 41. The base portion 41 has a plate shape that is long in the left-right direction, and is orthogonal to the front-rear direction. A length in the up-down direction of the base portion 41 is substantially the same as a length of the flat surface portion 50 of the end effector 5A. A length in the left-right direction of the base portion 41 is longer than a length in the left-right direction of the flat surface portion 50 of the end effector 5A. The base portion 41 is connected to the end effector 5A. A central portion in the left-right direction of a front surface of the base portion 41 faces the flat surface portion 50 of the end effector 5A.

A through hole 50H is provided in the central portion in the left-right direction of the base portion 41. The pawl unit 51 extending from the flat surface portion 50 of the end effector 5A is inserted through the through hole 50H, and protrudes further to the rear than a rear surface of the base portion 41.

An upward extending portion 42A is provided in the vicinity of a right end of the base portion 41. An upward extending portion 42B is provided in the vicinity of a left end of the base portion 41. Each of the upward extending portions 42A and 42B protrude further upward than an upper end portion of the base portion 41.

A rearward extending portion 43A is provided in a rear surface of the base portion 41, further to the right than a center thereof in the left-right direction. The rearward extending portion 43A extends to the rear. The rearward extending portion 43A has a plate shape, and is orthogonal to the left-right direction. A bridge portion 45A is provided at a right surface of the rearward extending portion 43A. The bridge portion 45A has a rod shape and extends to the right. A rearward extending portion 44A is provided at a right end portion of the bridge portion 45A. The rearward extending portion 44A extends diagonally upward and to the rear. The rearward extending portion 44A has a plate shape and is orthogonal to the left-right direction. The rearward extending portions 43A and 44A are separated from each other in the left-right direction.

A rearward extending portion 43B is provided in the rear surface of the base portion 41, further to the left than the center thereof in the left-right direction. The rearward extending portion 43B extends to the rear. The rearward extending portion 43B has a plate shape, and is orthogonal to the left-right direction. A bridge portion 45B is provided at a left surface of the rearward extending portion 43B. The bridge portion 45B has a rod shape and extends to the left. A rearward extending portion 44B is provided at a left end portion of the bridge portion 45B. The rearward extending portion 44B extends diagonally upward and to the rear. The rearward extending portion 44B has a plate shape and is orthogonal to the left-right direction. The rearward extending portions 43B and 44B are separated from each other in the left-right direction.

A through hole that extends in the left-right direction is provided in each of rear end portion of each of the rearward extending portions 43A, 43B, 44A, and 44B. The through holes of each of the rearward extending portions 43A, 43B, 44A, and 44B are aligned on a straight line in the left-right direction.

First support portion 2

The first support portion 2 is in contact with the cloth T attached to the platen 84 from above, and supports the cloth T. The first support portion 2 includes a first right support portion 2A and a first left support portion 2B. The first right support portion 2A and the first left support portion 2B have the same shape.

The first right support portion 2A includes an extension portion 21A and a plate body 22A. The extension portion 21A has a plate shape and is orthogonal to the up-down direction. The extension portion 21A extends toward the rear from an upper end portion of the upward extending portion 42A of the connecting portion 4. The plate body 22A is connected to a rear end portion of the extension portion 21A. The plate body 22A includes a base plate 23A and a rubber plate 24A. The base plate 23A is made of metal, and the rubber plate 24A is made of rubber. The rubber plate 24A is bonded to a lower surface of the base plate 23A.

The plate body 22A extends diagonally upward and to the rear from a connection portion with the extension portion 21A. The rubber plate 24A is exposed to a lower surface 220A of the plate body 22A. The lower surface 220A is inclined with respect to the horizontal direction. A direction orthogonal to the lower surface 220A and oriented in the opposite direction to the base plate 23A is oriented diagonally to the rear and downward.

The first left support portion 2B includes an extension portion 21B and a plate body 22B. The extension portion 21B extends toward the rear from an upper end portion of the upward extending portion 42B of the connecting portion 4. The plate body 22B includes a base plate 23B and a rubber plate 24B. The extension portion 21B, the plate body 22B, the base plate 23B, and the rubber plate 24B correspond to the extension portion 21A, the plate body 22A, the base plate 23A, and the rubber plate 24A of the first right support portion 2A. A lower surface 220B of the plate body 22B corresponds to the lower surface 220A of the plate body 22A.

Second support portion 3

The second support portion 3 is in contact with the cloth T attached to the platen 84 from below, and supports the cloth T. The second support portion 3 includes a second right support portion 3A, a second left support portion 3B, and a bridge portion 3C. The second right support portion 3A and the second left support portion 3B have the same shape. The bridge portion 3C spans between the second right support portion 3A and the second left support portion 3B.

The second right support portion 3A includes a link mechanism 6A. The link mechanism 6A includes a first joint 61 and a second joint 62.

The first joint 61 includes plate-shaped support bodies 61A and 61B having a substantial L shape in a right side view. The support bodies 61A and 61B have the same shape. The support bodies 61A and 61B are orthogonal to the left-right direction. The support body 61A is positioned to the left of the rearward extending portion 44A of the connecting portion 4. The support body 61B is positioned to the right of the rearward extending portion 43A of the connecting portion 4.

The support body 61A includes extending portions 601 and 602 extending from a section at the left of the rearward extending portion 44A of the connecting portion 4. Directions in which the respective extending portions 601 and 602 extend are orthogonal to each other. The extending portions 601 and 602 of the support body 61B extend from a section at the right of the rearward extending portion 43A of the connecting portion 4. In each of the support bodies 61A and 61B, through holes are formed at sections at which the extending portions 601 and 602 intersect.

A rotary shaft 46 has a circular column shape, and extends in the left-right direction. The rotary shaft 46 is inserted through the through holes of each of the rearward extending portions 43A, 43B, 44A, and 44B of the connecting portion 4, and through the through holes of each of the support bodies 61A and 61B. The first joint 61 is supported so as to be rotatable around the connecting portion 4 centered on the rotary shaft 46.

The first joint 61 further includes a bridge body 61C and a rotary shaft 63. The bridge body 61C is provided between leading end portions of the extending portions 602 of each of the support bodies 61A and 61B. A through hole is provided in the bridge body 61C. The rotary shaft 63 has a circular column shape, and extends in the left-right direction. The rotary shaft 63 is inserted through through holes provided in leading end portions of the extending portions 601 of each of the support bodies 61A and 61B. A right end portion of the rotary shaft 63 protrudes further to the right than the support body 61A. A left end portion of the rotary shaft 63 protrudes further to the left than the support body 61B.

The second joint 62 includes plate-shaped support bodies 62A and 62B that extend while curving. The support bodies 62A and 62B are orthogonal to the left-right direction. One end portion of the support body 62A is positioned to the right of the leading end portion of the extending portion 601 of the support body 61A of the first joint 61. The section of the rotary shaft 63 that protrudes further to the right than the support body 61A is inserted through a through hole provided in the one end portion of the support body 62A. One end portion of the support body 62B is positioned to the left of the leading end portion of the extending portion 601 of the support body 61B of the first joint 61. The section of the rotary shaft 63 that protrudes further to the left than the support body 61B is inserted through a through hole provided in the one end portion of the support body 62B. The second joint 62 is supported so as to be rotatable around the rotary shaft 63 with respect to the first joint 61.

The second joint 62 further includes a rotary shaft 64. The rotary shaft 64 is inserted through through holes provided in other end portions of each of the support bodies 62A and 62B of the second joint 62. The rotary shaft 64 extends between the other end portions of each of the support bodies 62A and 62B of the second joint 62.

The second right support portion 3A further includes a rotary body 6B. The rotary body 6B has a circular column shape. A center axis of the rotary body 6B extends in the left-right direction. A through hole along the center axis is formed in the rotary body 6B. The rotary shaft 64 is inserted through the through hole of the rotary body 6B. The rotary body 6B is supported so as to be rotatable around the rotary shaft 64 between the other end portions of each of the support bodies 62A and 62B of the second joint 62. The rotary body 6B includes a rubber cylindrical body 65. By causing an outer peripheral surface of the rubber cylindrical body 65 to come into contact with the cloth T, the rotary body 6B pulls the cloth T.

A one-way clutch is built into the rotary body 6B. The one-way clutch allows the rotary body 6B to rotate in the counterclockwise direction in a right side view (hereinafter referred to as a "first rotation direction D1"). On the other hand, the one-way clutch prohibits the rotary body 6B from rotating in the clockwise direction in a right side view (hereinafter referred to as a "second rotation direction D2").

The second right support portion 3A further includes an urging mechanism 6C. The urging mechanism 6C includes a clamp 67, a support rod 68, and a spring 69. The clamp 67 includes a pair of shaft bearing portions positioned on both the left and right of the rotary body 6B, and a bridge portion stretched between the pair of shaft bearing portions. The support rod 68 extends from the bridge portion of the clamp 67 toward the bridge body 61C of the first joint 61. Of the support rod 68, an end portion on the opposite side to the clamp 67 is inserted through the through hole in the bridge body 61C. The spring 69 is a compression coil spring. The spring 69 is interposed between the clamp 67 and the bridge body 61C. The spring 69 urges the rotary shaft 64 and the rotary body 6B, via the clamp 67. A force acts on the rotary body 6B in a direction away from the bridge body 61C.

The second left support portion 3B includes a link mechanism 7A, a rotary body 7B, and an urging mechanism 7C. The link mechanism 7A includes a first joint 71 and a second joint 72. The first joint 71 includes support bodies 71A and 71B, a bridge body 71C, and a rotary shaft 73. The second joint 72 includes support bodies 72A and 72B and a rotary shaft 74. The rotary body 7B includes a rubber cylindrical body 75. The urging mechanism 7C includes a clamp 77, a support rod 78, and a spring 79.

The extending portions 601 and 602 of the support portion 71A of the first joint 71 extend from a section at the left of the rearward extending portion 43B of the connecting portion 4. The extending portions 601 and 602 of the support portion 71B of the first joint 71 extend from a section at the right of the rearward extending portion 44B of the connecting portion 4. In each of the support bodies 71A and 71B, the rotary shaft 46 is inserted through through holes formed at sections at which the extending portions 601 and 602 intersect. The first joint 71 is supported so as to be rotatable around the connecting portion 4 centered on the rotary shaft 46. The second joint 72 is supported so as to be rotatable around the rotary shaft 73 with respect to the first joint 71, at each of one end portions of the support bodies 72A and 72B of the second joint 72. The rotary body 7B is supported so as to be rotatable around the rotary shaft 74, between each of other end portions of the support bodies 72A and 72B of the second joint 72.

A one-way clutch is built into the rotary body 7B. The one-way clutch allows the rotary body 7B to rotate in the first rotation direction D1. On the other hand, the one-way clutch prohibits the rotary body 7B from rotating in the second rotation direction D2.

A pair of shaft bearing portions of the clamp 77 of the urging mechanism 7C are positioned on both the left and right of the rotary body 7B. The support rod 78 of the clamp 77 extends from a bridge portion of the clamp 77 toward the bridge body 71C of the first joint 71. Of the support rod 78, an end portion on the opposite side to the clamp 77 is inserted through a through hole in the bridge body 71C. The spring 79 is interposed between the clamp 77 and the bridge body 71C. The spring 79 urges the rotary shaft 74 and the rotary body 7B, via the clamp 77. A force acts on the rotary body 7B in a direction away from the bridge body 71C.

The bridge portion 3C includes a rectangular column body 31 that extends in the left-right direction. The rectangular column body 31 is respectively connected to upper end portions of the extending portions 601 of each of the support bodies 61A and 61B of the second right support portion 3A and of the extending portions 601 of each of the support bodies 71A and 71B of the second left support portion 3B.

The bridge portion 3C further includes an extending body 32 that extends from the rectangular column body 31. The extending body 32 is connected to a central section, in the left-right direction, of a lower end surface of the rectangular column body 31, and extends diagonally to the front and downward. A through hole extending to the left and right is formed in a lower end portion of the extending body 32. The rotary shaft 46 is inserted through the through hole of the extending body 32. The bridge portion 3C can rotate around the rotary shaft 46 together with the first joint 61 of the second right support portion 3A and the first joint 71 of the second left support portion 3B connected to the rectangular column body 31.

Support bodies 32A and 32B extend to the rear from positions separated diagonally upward and to the front from a section, of the extending body 32, in which the through hole is formed through which the rotary shaft 46 is inserted. The support bodies 32A and 32B each have a plate shape, and are orthogonal to the left-right direction. The support bodies 32A and 32B are separated from each other in the left-right direction. A support shaft 33 is provided between rear end portions of each of the support bodies 32A and 32B. The support shaft 33 has a circular column shape, and extends in the left-right direction. The support shaft 33 fits into the U-shaped groove 51B of the pawl 51A of the pawl unit 51 extending from the end effector 5A of the rotating mechanism 5.

When the end effector 5A moves the pawl unit 51 in the up-down direction and thus moves the support shaft 33 in the up-down direction, the support shaft 33 of the bridge portion 3C fitted into the U-shaped groove 51B also moves in the up-down direction. The bridge portion 3C rotates around the rotary shaft 46 that is separated from the support shaft 33, in accordance with the movement of the support shaft 33 in the up-down direction. In accordance with the rotation of the bridge portion 3C, the first joint 61 of the link mechanism 6A of the second right support portion 3A and the first joint 71 of the link mechanism 7A of the second left support portion 3B that are connected via the rectangular column body 31 also rotate around the rotary shaft 46. Further, the rotary body 6B supported by the second joint 62 rotates in accordance with the rotation of the first joint 61 of the link mechanism 6A. The rotary body 7B supported by the second joint 72 rotates in accordance with the rotation of the first joint 71 of the link mechanism 7A.

A direction K1 is defined that extends along the support bodies 61A and 61B of the first joint 61 of the second right support portion 3A and is a direction from a center of the rotary shaft 46 toward a center of the rotary shaft 63. The direction K1 coincides with the direction that extends along the support bodies 71A and 71B of the first joint 71 of the second left support portion 3B and the direction that is from the center of the rotary shaft 46 to the center of the rotary shaft 63. A direction K2 extending horizontally to the rear from the center of the rotary shaft 46 is defined. An angle formed by the directions K1 and K2 will be referred to as an "angle θ of the first joints 61 and 71".

Removal steps

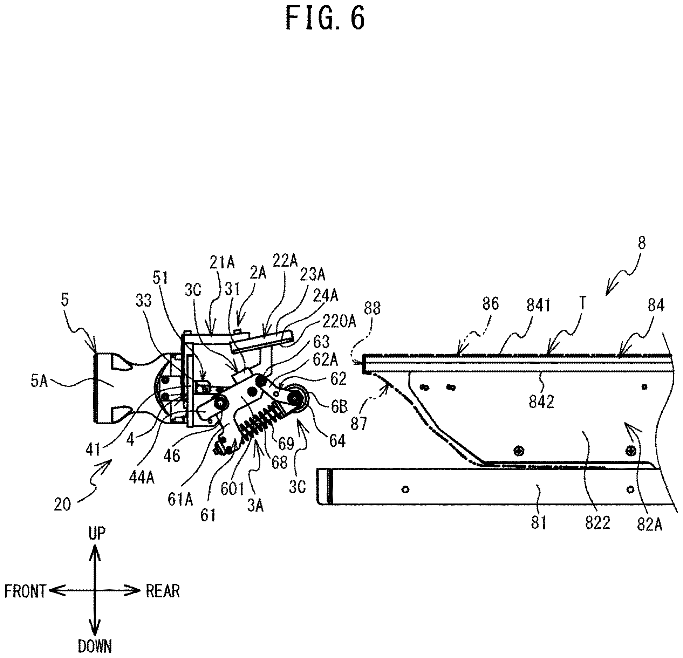

Each of steps (a first step to a seventh step) for removing the cloth T attached to the platen 84 of the platen unit 8 using the removal device 20 will be described with reference to FIG. 6 to FIG. 12. In the following description, operations of the first right support portion 2A of the first support portion 2, and the second right support portion 3A of the second support portion 3 of the removal device 20 will be described, but the first left support portion 2B of the first support portion 2, and the second left support portion 3B of the second support portion 3 of the removal device 20 operate in the same manner. Unless otherwise described, it is assumed that rotation directions (the clockwise direction or the counterclockwise direction) are described assuming a state of the removal device 20 being viewed from the right.

At the first step shown in FIG. 6, a user attaches the cloth T to the platen 84. Of the cloth T, a section extending along the upper surface 841 of the platen 84 will be referred to as a "first section 86", and a section facing the lower surface 842 of the platen 84 will be referred to as a "second section 87". Of the cloth T, a section folded back at the front end section 84F of the platen 84, that is, a section around the neck of the T-shirt, will be referred to as a "third section 88". The removal device 20 is disposed at a position separated to the front from the platen 84. With respect to the first right support portion 2A, the connecting portion 4 of the removal device 20 is positioned on the opposite side from the platen unit 8 in the front-rear direction. The angle θ of the first joint 61 is approximately 30 degrees.

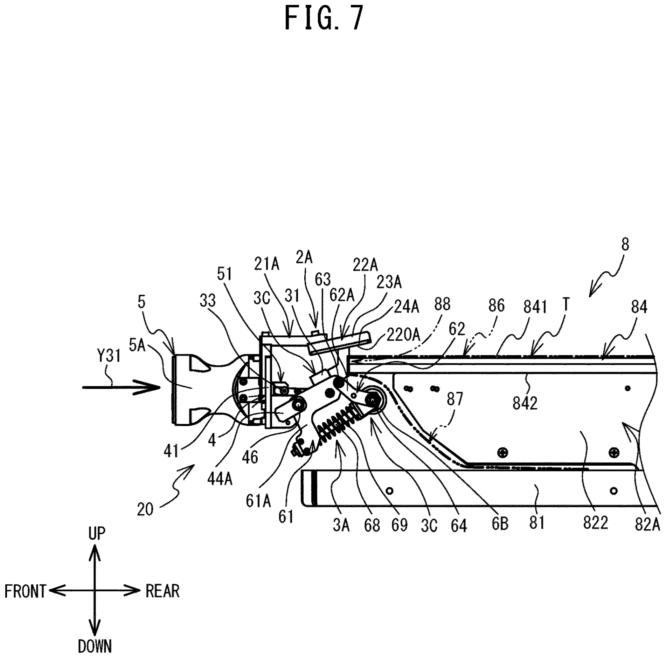

At the second step shown in FIG. 7, in accordance with the robot arm moving the end effector 5A to the rear, the removal device 20 moves to the rear (the direction of an arrow Y31). The removal device 20 approaches the platen unit 8, which is to the rear thereof, from the front. The first right support portion 2A is positioned further in the upward direction than the first section 86 of the cloth T in the up-down direction. The plate body 22A is separated upward from the upper surface 841 of the platen 84 and the first section 86 of the cloth T. The lower surface 220A of the plate body 22A faces the first section 86 of the cloth T. The second right support portion 3A is positioned further in the downward direction than the second section 87 of the cloth T in the up-down direction. The rotary body 6B is separated downward from the lower surface 842 of the platen 84 and the second section 87 of the cloth T.

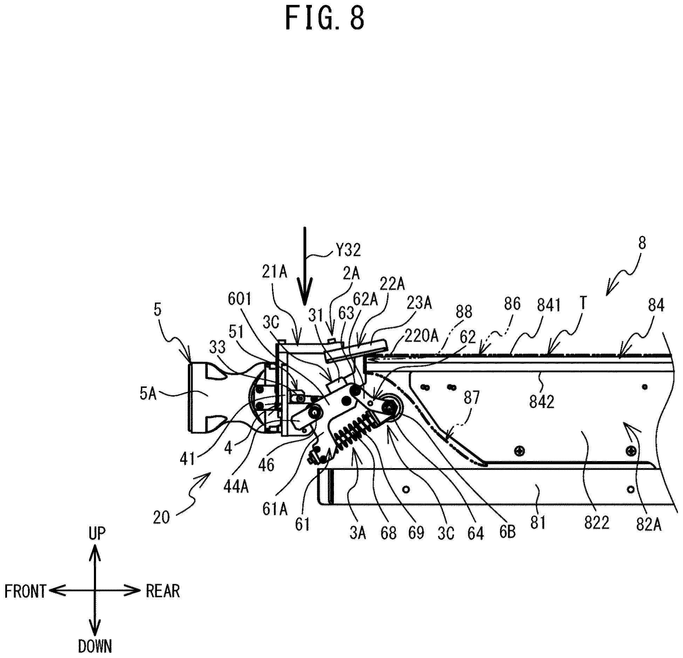

At the third step shown in FIG. 8, in accordance with the robot arm moving the end effector 5A downward, the removal device 20 moves downward (the direction of an arrow Y32). The plate body 22A approaches the platen 84 from above. The lower surface 220A of the plate body 22A comes into contact with the surface, of the cloth T, on the opposite side from the surface thereof facing the platen 84. The cloth T is clamped from both sides in the up-down direction by the plate body 22A and the platen 84. After the plate body 22A has come into contact with the cloth T, the robot arm stops the downward movement of the end effector 5A. In this way, the downward movement of the removal device 20 also stops.

Here, in contrast to the fact that the upper surface 841 of the platen 84 is extending in the horizontal direction, the lower surface 220A of the plate body 22A is inclined with respect to the horizontal direction. Thus, in accordance with the plate body 22A coming into contact with the platen 84, a boundary section between the first section 86 and the third section 88 of the cloth T attached to the platen 84 comes into contact with the lower surface 220A of the plate body 22A.

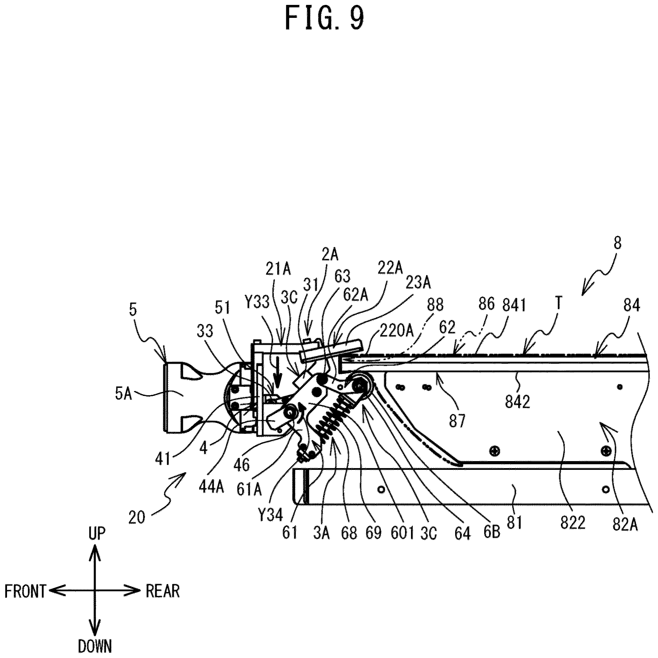

At the fourth step shown in FIG. 9, the end effector 5A of the rotating mechanism 5 moves the pawl unit 51 downward (an arrow Y33). In this way, the first joint 61 rotates by approximately 15 degrees in the counterclockwise direction around the rotary shaft 46 (an arrow Y34). The angle θ of the first joint 61 becomes approximately 45 degrees.

In accordance with the rotation of the first joint 61, the rotary body 6B connected to the first joint 61 via the second joint 62 moves upward. The rotary body 6B comes into contact with the second section 87 of the cloth T from below. In accordance with the rotary body 6B moving further upward, the second section 87 of the cloth T is clamped between the rotary body 6B and the lower surface 842 of the platen 84.

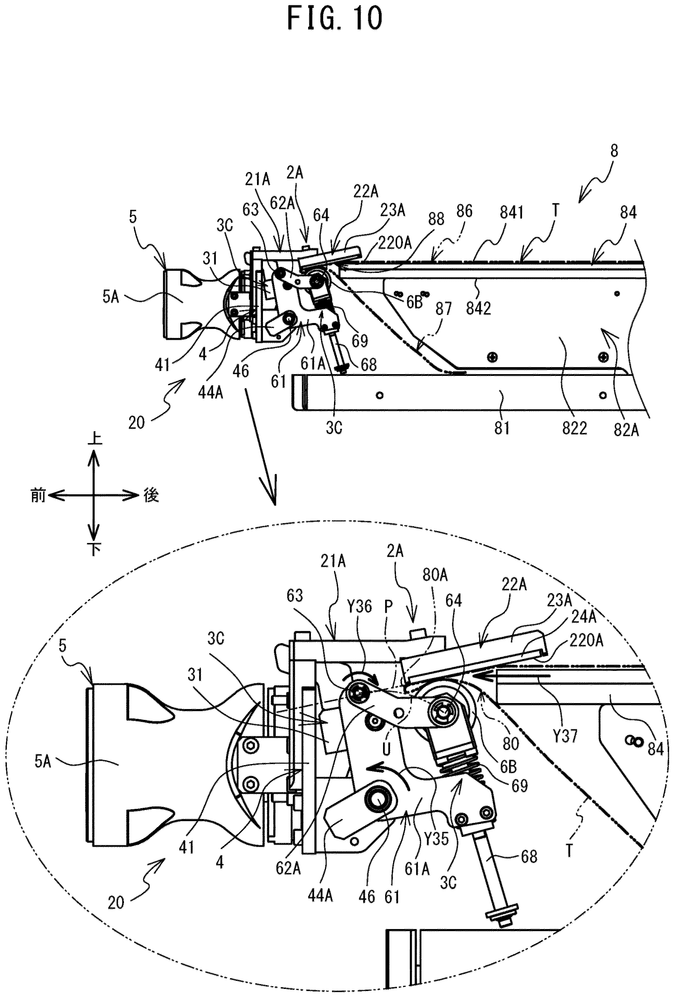

At the fifth step shown in FIG. 10, the end effector 5A of the rotating mechanism 5 moves the pawl unit 51 further downward. In this way, the first joint 61 rotates in the counterclockwise direction around the rotary shaft 46 (an arrow Y35). At the fifth step, the first joint 61 rotates further in the state in which the cloth T is clamped between the rotary body 6B and the platen 84 at the fourth step. Thus, the second joint 62 rotates in the clockwise direction around the rotary shaft 63 with respect to the first joint 61 (an arrow Y36). In this way, the spring 69 is compressed. The spring 69 urges the rotary body 6B toward the platen 84. After the angle θ of the first joint 61 exceeds 90 degrees, the rotary body 6B moves to the front in the state in which the rotary body 6B is in contact with the second section 87 of the cloth T from below (an arrow Y37).

Note that since the first section 86 of the cloth T is clamped between the lower surface 220A of the plate body 22A and the platen 84, the movement of the first section 86 of the cloth T toward the front is restricted. Further, since the one-way clutch is built into the rotary body 6B, the rotary body 6B does not rotate in the second rotation direction D2 when moving toward the front. Thus, the second section 87 of the cloth T moves to the front in accordance with the movement of the rotary body 6B to the front. A part of the cloth T is removed from the platen 84 in a state in which the rotary body 6B has moved further to the front than the front end section 84F of the platen 84. A section of the cloth T that is not closely attached to the platen 84 (hereinafter referred to as a "removal section 80") is formed.

The removal section 80 of the cloth T extends to the front from a section facing the upper surface 841 of the platen 84, is bent at a front end portion, and extends toward a section facing the lower surface 842 of the platen 84. The plate body 22A and the rotary body 6B clamp, from both sides in the up-down direction, a section of the removal section 80 separated to the rear from the bent section at the front end portion.

When the angle θ of the first joint 61 has become approximately 100 degrees, the end effector 5A of the rotating mechanism 5 stops the downward movement of the pawl unit 51. In this way, the rotation of the first joint 61 is stopped.

At the fifth step, a region through which the rotary shaft 63 positioned at a connection section of the first joint 61 and the second joint 62 passes is indicated by a "movement trajectory U". A virtual plane extending along the lower surface 220A of the plate body 22A is indicated by a "virtual plane P". At this time, a part of the movement trajectory U passes on the opposite side to the first section 86 of the cloth T with respect to the virtual plane P, that is, passes above the virtual plane P.

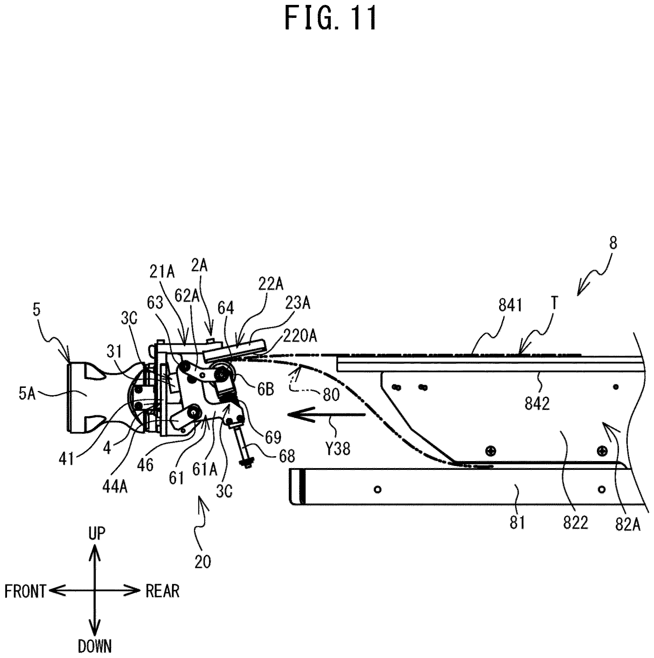

At the sixth step shown in FIG. 11, the removal device 20 moves to the front in accordance with the robot arm moving the end effector SAto the front (an arrow Y38). The cloth T moves to the front with respect to the platen unit 8, and is removed from the platen 84.

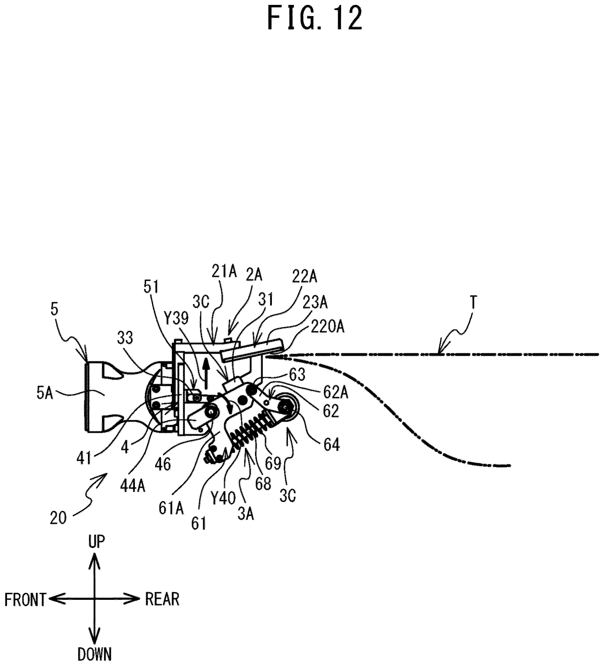

At the seventh step shown in FIG. 12, the end effector 5A of the rotating mechanism 5 moves the pawl unit 51 upward (an arrow Y39). In this way, the first joint 61 rotates in the clockwise direction around the rotary shaft 46 (an arrow Y40). The rotary body 6B moves to the rear. Note that the one-way clutch built into the rotary body 6B does not restrict the rotation of the rotary body 6B in the first rotation direction D1. Thus, the rotary body 6B rotates in the first rotation direction D1 in the course of moving to the rear while in contact with the plate body 22A.

The rotary body 6B moves downward in accordance with the first joint 61 rotating further in the clockwise direction around the rotary shaft 46. The rotary body 6B moves away downward from the plate body 22A. The state of the cloth T being clamped by the plate body 22A and the rotary body 6B is released. In this way, it becomes possible to remove the cloth T from the removal device 20.

When the angle θ of the first joint 61 has become approximately 30 degrees, the end effector 5A of the rotating mechanism 5 stops the upward movement of the pawl unit 51. In this way, the rotation of the first joint 61 is stopped.

Actions and effects of present embodiment

The removal device 20 moves the rotary bodies 6B and 7B to the front by the rotation of the first joints 61 and 71 in the state of causing the rotary bodies 6B and 7B of the second support portion 3 to be in contact with the second section 87 of the cloth T. In this way, the removal device 20 forms the removal section 80 in the cloth T, and moves the formed removal section 80, which is clamped by the first support portion 2 and the second support portion 3, to the front. As a result, the cloth T is removed from the platen 84. In this way, the removal device 20 contributes to removing the cloth T from the platen 84, even when there is no grip margin 80A on the cloth T.

In the course of the cloth T being removed from the platen 84, of the grip margin 80A of the cloth T, the bent section at the front end portion is not directly clamped by the first support portion 2 and the second support portion 3. Thus, the removal device 20 contributes to suppressing a fold from being formed in the cloth T clamped by the first support portion 2 and the second support portion 3.

The second support portion 3 includes the rotary bodies 6B and 7B as the sections that come into contact with the second section 87 of the cloth T. The rotary bodies 6B and 7B rotate in the course of the seventh step in which the cloth T is detached from the platen 84 and removed from the first support portion 2 and the second support portion 3 by the rotation of the first joints 61 and 71. By rotating the rotary bodies 6B and 7B, the removal device 20 contributes to reducing a force necessary when the end effector 5A moves the pawl unit 51 upward for rotating the first joints 61 and 71. Thus, the removal device 20 contributes to facilitating a detaching operation of the cloth T by the end effector 5A.

The second support portion 3 includes the link mechanisms 6A and 7A. The link mechanism 6A includes the first joint 61 and the second joint 62, and the link mechanism 7A includes the first joint 71 and the second joint 72. The removal device 20 transmits the force when the first joints 61 and 71 are rotated by the rotating mechanism 5 to the rotary bodies 6B and 7B, via the second joints 62 and 72. In this way, the removal device 20 contributes to moving the rotary bodies 6B and 7B to the front and removing the cloth T from the platen 84.

The second support portion 3 includes the springs 69 and 79 that urge the rotary bodies 6B and 7B toward the platen 84. The rotary bodies 6B and 7B clamp the cloth T against the platen 84 with an appropriate amount of force using the urging force of the springs 69 and 79. Thus, the rotary bodies 6B and 7B appropriately clamp the cloth T against the platen 84, and contribute to removing the cloth T from the platen 84. Note that, compared to a case in which another type of spring is used, by using the compression springs as the springs 69 and 79, the rotary bodies 6B and 7B contribute to improving an accuracy of the strength with which the rotary bodies 6B and 7B clamp the cloth T against the platen 84.

The one-way clutches are built into the rotary bodies 6B and 7B. The one-way clutch contributes to restricting the rotation of the rotary bodies 6B and 7B in the second rotation direction D2 when removing the cloth T from the platen 84. Thus, the rotary bodies 6B and 7B contribute to clamping the cloth T against the platen 84 appropriately and removing the cloth T from the platen 84. On the other hand, the one-way clutch allows the rotary bodies 6B and 7B to rotate in the first rotation direction D1 in the course of the seventh step in which the cloth T is detached from the platen 84 and removed from the first support portion 2 and the second support portion 3 by rotating the first joints 61 and 71. Thus, the removal device 20 contributes to facilitating the operation of the end effector 5A of moving the pawl unit 51 upward and detaching the cloth T.

As a result of the pawl unit 51 moving the support shaft 33 in the up-down direction, the rotating mechanism 5 rotates the bridge portion 3C provided with the support shaft 33 around the rotary shaft 46 that is separated from the rotary shaft 46. In this case, the first joints 61 and 71 connected to the rectangular column body 31 of the bridge portion 3C also rotate around the rotary shaft 46 and the rotary bodies 6B and 7B move in the front-rear direction. The removal device 20 contributes to converting a linear operation in the up-down direction of the pawl unit 51 of the rotating mechanism 5 into a rotational operation by the bridge portion 3C, and to rotating the first joints 61 and 71 and moving the rotary bodies 6B and 7B in the front-rear direction.

The lower surface 220A of the plate body 22A of the first support portion 2, and the lower surface 220B of the plate body 22B face the first section 86 of the cloth T attached to the platen 84. The first support portion 2 contributes to appropriately clamping the cloth T between the plate bodies 22A and 22B and the platen 84. Note that the lower surfaces 220A and 220B are inclined with respect to the horizontal direction. Thus, the removal device 20 contributes to suppressing a contact area between the cloth T attached to the upper surface 841 of the platen 84 extending in the horizontal direction, and the lower surface 220A of the plate body 22A and the lower surface 220B of the plate body 22B. Thus, the removal device 20 contributes to reducing the possibility of the cloth T being contaminated by the contact of the plate bodies 22A and 22B with the cloth T.

The rotary body 6B includes the rubber cylindrical body 65, and the rotary body 7B includes the rubber cylindrical body 75. The rubber plate 24A is exposed to the lower surface 220A of the plate body 22A, and the rubber plate 24B is exposed to the lower surface 220B of the plate body 22B. Thus, the removal device 20 contributes to causing the rotary bodies 6B and 7B, and the plate bodies 22A and 22B to attach closely to the cloth T. Thus, the removal device 20 contributes to appropriately clamping the cloth T using the first support portion 2 and the second support portion 3.

The print system 1 is provided with the platen unit 8, the removal device 20, and the printer 9. The print system 1 contributes to the easy removal, from the platen 84 of the platen unit 8, using the removal device 20, the cloth T on which the printing has been performed by the printer 9 discharging the ink from the head 9A.

The robot arm moves the removal device 20 in the front-rear direction. In this way, the print system 1 causes the removal device 20 to approach the platen unit 8 and remove the cloth T from the platen 84, and subsequently, causes the removal device 20 to move away from the platen unit 8. Thus, the print system 1 contributes to detaching the cloth T from the platen 84 using the removal device 20, while suppressing the conveyance of the platen unit 8 from being obstructed by the removal device 20.

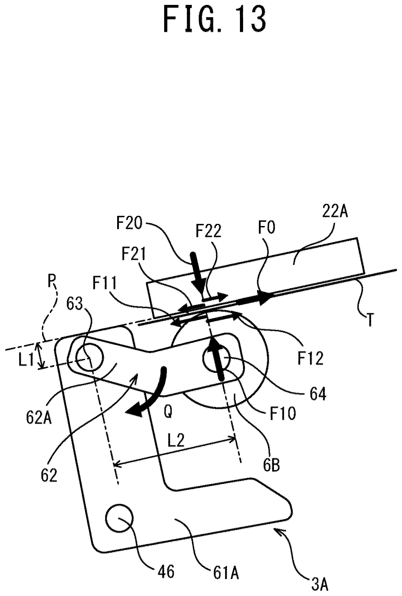

In contrast to the present embodiment, an example will be described of a case in which the movement trajectory U of the center of the rotary shaft 63 of the second right support portion 3A is positioned lower than the virtual plane P. As shown in FIG. 13, a frictional force acting on the lower surface of the cloth T due to the contact between the rotary body 6B and the cloth T is denoted by "F11". A frictional force acting on the rotary body 6B due to the contact between the rotary body 6B and the cloth T is denoted by "F12". A frictional force acting on the upper surface of the cloth T due to the contact between the plate body 22A and the cloth T is denoted by "F21". A frictional force acting on the plate body 22A due to the contact between the plate body 22A and the cloth T is denoted by "F22". A pressing force by the rotary body 6B is denoted by "F10". A reaction force acting on the plate body 22A is denoted by "F20". A pulling force pulling the cloth T toward the platen 84 is denoted by "F0". A distance between the virtual plane P and the center of the rotary shaft 63 is denoted by "L1". A distance between the center of the rotary shaft 63 and the center of the rotary shaft 64 is denoted by "L2". A rotational torque of the support body 62A of the second joint 62 is denoted by "Q". A frictional coefficient of rubber is denoted by "$\mu$".

Taking into account an equilibrium relationship of the forces, the following relationships are satisfied:

$$F0 = F11 + F21, \ F11 = F12 = \mu \times F10, \ F21 = F22 = \mu \times F20$$

$$Q = F12 \times L1 = \mu \times F10 \times L1$$

The reaction force F20 is a resultant force of the pressing force F10, and a pressing force by the rotational torque Q. The pressing force by the rotational torque Q acts in the reverse direction (a loss direction) to the pressing force F10. Thus, the following relationships are satisfied.

$$F20 = F10 - Q/L2 = F10 - F12 \times L1/L2 = F10 - (\mu \times F10) \times L1/L2 = (1 - \mu \times L1/L2) \times F10$$

Thus, the pulling force F0 pulling the cloth T toward the platen 84 satisfies the following relationships.

$$F0 = F11 + F21 = \mu \times (F10 + F20) = \mu \times (F10 + (1 - \mu \times L1/L2) \times F10) = \mu \times F10 \times (2 - \mu \times L1/L2)$$

In other words, the term of "- $\mu \times$ L1/L2" corresponds to the loss. Thus, for example, the larger L1 is, that is, the further downward the position of the rotary shaft 63, which is the rotational center of the support body 62A of the second joint 62, the larger the loss.

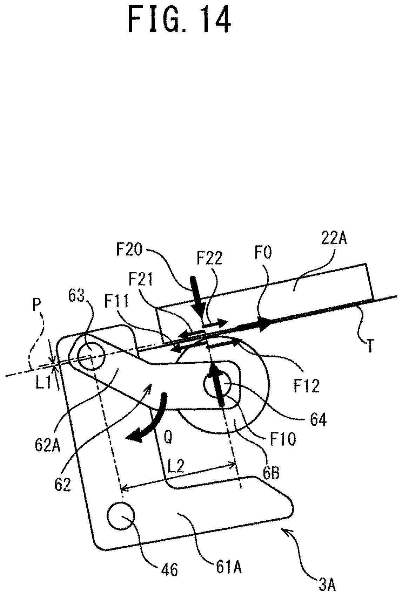

On the other hand, as in the present embodiment, the example is described of the case in which a part of the movement trajectory U of the center of the rotary shaft 63 of the second right support portion 3A is higher than the virtual plane P. As shown in FIG. 14, the reaction force F20 is the resultant force of the pressing force F10 and the pressing force by the rotational torque Q. The pressing force of the rotational torque Q acts in the same direction as the pressing force F10. Thus, the following relationships are satisfied.

$$F20 = F10 - Q/L2 = F10 + F12 \times L1/L2 = F10 + (\mu \times F10) \times L1/L2 = (1 + \mu \times L1/L2) \times F10$$

Thus, the pulling force F0 pulling the cloth T toward the platen 84 satisfies the following relationships.

$$F0 = F11 + F21 = \mu \times (F10 + F20) = \mu \times (F10 + (1 + \mu \times L1/L2) \times F10) = \mu \times F10 \times (2 + \mu \times L1/L2)$$

In other words, the friction increases by an amount corresponding to the term of "$\mu \times$ L1/L2". Thus, for example, the larger L1 is, that is, the further upward the position of the rotary shaft 63, which is the rotational center of the support body 62A of the second joint 62, the greater the contribution to obtaining the pressing force equal to or greater than the urging force of the spring 69.

Thus, by causing the rotary shaft 63 to be disposed such that a part of the movement trajectory U thereof passes higher than the virtual plane P, the removal device 20 contributes to maintaining the frictional force between the first support portion 2 and the cloth T, and the frictional force between the rotary bodies 6B and 7B of the second support portion 3 and the cloth T. As a result, the removal device 20 contributes to appropriately removing the cloth T from the platen 84.

Modified example

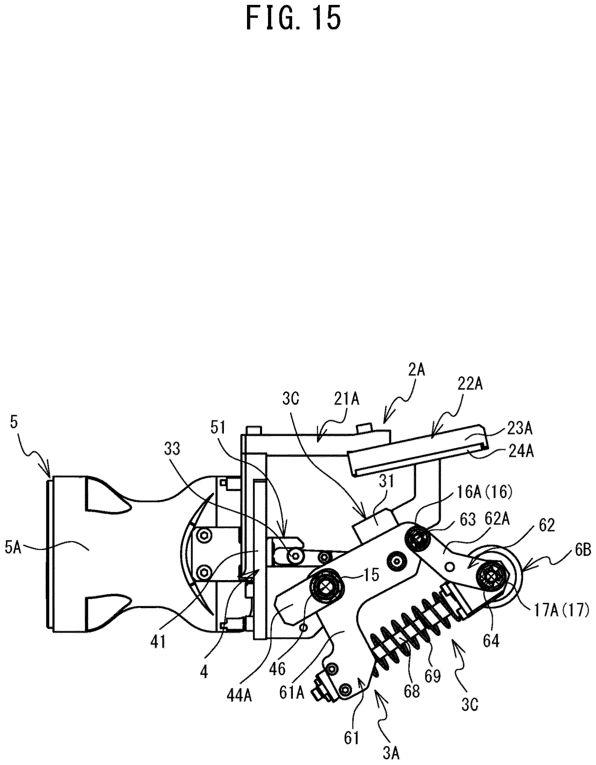

The removal device 20 may be further provided with at least one of a first motor 15, a second motor 16, and a third motor 17, as shown in FIG 15. Specifically, this is as follows.

The first motor 15 is provided in place of the pawl unit 51 provided at the end effector 5A of the rotating mechanism 5. In this case, the rotary shaft 46 is connected to the first joints 61 and 71 of the second support portion 3. A rotary shaft of the first motor 15 is connected to the rotary shaft 46. When the rotary shaft 46 rotates due to the driving of the first motor 15, the first joints 61 and 71 connected to the rotary shaft 46 rotate with respect to the connecting portion 4. In this way, the rotary bodies 6B and 7B of the second support portion 3 can move in the front-rear direction.

As described above, when the first motor 15 is provided in the removal device 20, a force when the first joints 61 and 71 are rotated by the first motor 15 is transmitted to the rotary bodies 6B and 7B via the second joints 62 and 72. In this way, the removal device 20 contributes to detaching the cloth T from the removal device 20 by moving the rotary bodies 6B and 7B to the rear, after the cloth T is removed from the platen 84 as a result of the removal device 20 moving to the front with respect to the platen 84. Further, compared to the case in which the linear operation of the pawl unit 51 is converted into the rotational operation by the bridge portion 3C and the rotary bodies 6B and 7B are caused to move, the removal device 20 contributes to efficiently transmitting the driving force of the rotating mechanism 5 and moving the rotary bodies 6B and 7B.

A second motor 16A is provided in place of the urging mechanism 6C. In this case, the rotary shaft 63 of the second right support portion 3A is connected to the second joint 62 of the second right support portion 3A. A rotary shaft of the second motor 16A is connected to the rotary shaft 63. When the rotary shaft 63 rotates due to the driving force of the second motor 16A, the second joint 62 connected to the rotary shaft 63 rotates with respect to the first joint 61. In this case, the rotary body 6B supported by the second joint 62 also rotates.

Note that, although a description thereof is omitted, a second motor is also connected to the rotary shaft 73 of the second left support portion 3B in a similar manner to the second motor 16A. Hereinafter, the second motor 16A provided in the second right support portion 3A, and the second motor provided in the second left support portion 3B will be collectively referred to as the "second motor 16".

In this way, when the second motor 16 is provided in the removal device 20, the cloth T is clamped between the platen 84 and the rotary bodies 6B and 7B, using a force of an appropriate strength, by the torque of the second motor 16. Further, by adjusting the torque of the second motor 16, the appropriate torque corresponding to a material of the cloth T is imparted to the rotary bodies 6B and 7B. Thus, the rotary bodies 6B and 7B contribute to appropriately clamping the cloth T between the platen 84 and the rotary bodies 6B and 7B, and removing the cloth T from the platen 84.

A third motor 17A is used in place of the one-way clutch built into the rotary body 6B. In this case, the rotary shaft 64 is connected to the rotary body 6B. A rotary shaft of the third motor 17A is connected to the rotary shaft 64. When the third motor 17A is in an excited state, the rotation of the rotary shaft 64 is restricted, and thus, the rotation of the rotary body 6B is also restricted. On the other hand, when the excited state of the third motor 17A is cancelled, the rotary shaft 64 is able to rotate, and thus the rotation of the rotary body 6B is also possible.

Note that, although a description thereof is omitted, a third motor is also connected to the rotary shaft 74 of the second left support portion 3B in a similar manner to the third motor 17A. Hereinafter, the third motor 17A provided in the second right support portion 3A, and the third motor provided in the second left support portion 3B will be collectively referred to as the "third motor 17".

In this way, when the third motor 17 is provided in the removal device 20, by causing the third motor 17 to be in the excited state, when detaching the cloth T from the platen 84, the rotation of the rotary bodies 6B and 7B is restricted. On the other hand, when detaching the cloth T, which has been removed from the platen 84, from the removal device 20, the rotary bodies 6B and 7B rotate.

Note that, depending on a product configuration and size of the cloth T, at the fourth step shown in FIG. 9, the rotary bodies 6B and 7B may come into contact with a section, of the second section 87 of the cloth T, in the vicinity of the front end portion of the platen 84. In this case, at the fifth step shown in FIG. 10, even when the rotary bodies 6B and 7B are moved to the front, there is a possibility that the grip margin 80A having a sufficient size cannot be secured.

In this type of case, for example, the removal device 20 may rotate the rotary bodies 6B and 7B in the first rotation direction D1 using the third motor 17, after causing the rotary bodies 6B and 7B to come into contact with the second section 87 of the cloth T at the fourth step. In this case, with the removal device 20, a movement amount when moving the second section 87 of the cloth T to the front is larger than when the rotary bodies 6B and 7B do not rotate. In this way, the removal device 20 contributes to forming the grip margin 80A that is large enough in the cloth T, even when, due to the product configurations and the sizes of the removal device 20 and the platen 84, the rotary bodies 6B and 7B come into contact with a section, of the second section 87 of the cloth T, in the vicinity of the front end portion of the platen 84. In this way, the removal device 20 contributes to reliably clamping the cloth T using the rotary bodies 6B and 7B and the plate bodies 22A and 22B.

Other modified examples

The present invention is not limited to the above-described embodiment and modified example, and various changes are possible. In the print system 1, the removal device 20 need not necessarily move in the front-rear direction, and instead, the platen unit 8 may move in the front-rear direction. In this case, the cloth T may be removed from the platen 84 after the platen unit 8 has moved in a direction approaching the removal device 20. The platen unit 8 including the platen 84 from which the cloth T has been removed may subsequently move in a direction away from the removal device 20. The removal device 20 may be provided integrally with the platen unit 8. In this case, the removal device 20 may be provided in each of a plurality of platen units.

A printing method of the printer 9 is not limited to being an inkjet method, and a printer may perform the printing using a variety of methods.

The removal device 20 may include only one of the first right support portion 2A and the first left support portion 2B, and may include only one of the second right support portion 3A and the second left support portion 3B.

In place of the link mechanisms 6A and 7A, the second support portion 3 may include a movement mechanism capable of moving the rotary bodies 6B and 7B in the front-rear direction. The removal device 20 may remove the cloth T from the platen 84 by moving the rotary bodies 6B and 7B to the front in the horizontal direction.

The rotary bodies 6B and 7B may be configured to be unable to rotate in both the first rotation direction D1 and the second rotation direction D2 with respect to the second joints 62 and 72. In place of the rotary bodies 6B and 7B, a rectangular column body, a plate body, or the like may be provided. The second support portion 3 may remove the cloth T from the platen 84 by moving to the front in a state in which the rectangular column body, the plate body, or the like is caused to be in contact with the second section 87 of the cloth T.

In place of the springs 69 and 79, the urging mechanisms 6C and 7C may include torsion coil springs provided on the rotary shafts 63 and 73. The urging mechanisms 6C and 7C may urge the rotary bodies 6B and 7B toward the platen 84 by urging the second joints 62 and 72 using the torsion coil springs. By using the torsion coil springs, a space necessary for accommodating the second support portion 3 is made smaller, and this contributes to downsizing the removal device 20.

The lower surfaces 220A and 220B of the plate bodies 22A and 22B of the first support portion 2 may extend horizontally. The first support portion 2 may include a rotary body in place of the plate bodies 22A and 22B of the first support portion 2. This rotary body may be configured to be rotatable by a motor. The lower surfaces 220A and 220B of the plate bodies 22A and 22B are not limited to being made of rubber, and another material may be used that has substantially the same coefficient of friction as rubber or a greater coefficient of friction than rubber. The rotary bodies 6B and 7B need not necessarily include the rubber cylindrical bodies 65 and 75. The rotary bodies 6B and 7B themselves may be made of rubber.

Other

The upward direction is an example of a "first direction" of the present invention. The downward direction is an example of a "second direction" of the present invention. The direction to the front is an example of a "third direction" of the present invention. The upper surface 841 of the platen 84 is an example of a "first surface" of the present invention. The lower surface 842 of the platen 84 is an example of a "second surface" of the present invention. The cloth T is an example of a "medium" of the present invention. The rotary bodies 6B and 7B are an example of a "second contact portion" of the present invention. The pawl unit 51 is an example of a "shaft support member" of the present invention. The support shaft 33 is an example of a "first shaft" of the present invention. The rotary shaft 46 is an example of a "second shaft" of the present invention. The end effector 5A is an example of a "movement mechanism" of the present invention. The lower surfaces 220A and 220B of the plate bodies 22A and 22B are an example of a "third surface" of the present invention.

**Claims**

1. A removal device (20) configured to remove a medium (T) from a platen (84), the medium (T) including a first section (86), a second section (87), and a third section (88), the first section (86) extending along a first surface (841) being an end surface of the platen (84) in a first direction, the second section (87) extending along a second surface (842) being an end surface of the platen (84) in a second direction opposite to the first direction, and the third section (88) being a section joining the first section (86) and the second section (87) and being folded back at an end portion of the platen (84) in a third direction orthogonal to the first direction and the second direction, the removal device (20) comprising:

   a first support portion (2) positioned on an opposite side from the platen (84) with respect to the first section (86) of the medium (T) in the first direction;
   a second support portion (3) including a second contact portion (6B, 7B),
   the second contact portion (6B, 7B) being configured to move in the third direction, and configured to come into contact with a second opposite surface of the second section (87) of the medium (T), the second opposite surface being on the opposite side to a second facing surface of the second section (87) of the medium (T), and the second facing surface facing the second surface (842) of the platen (84); and
   a connecting portion (4) positioned on the opposite side from the platen (84) with respect to the first support portion (2) and the second support portion (3) in the third direction, and being configured to connect the first support portion (2) and the second support portion (3) with each other.

2. The removal device (20) according to claim 1, wherein
   when the second contact portion (6B, 7B) of the second support portion (3) moves in the third direction in a state of contact with the second section (87) of the medium (T), the first support portion (2) comes into contact with a first opposite surface of the first section (86) of the medium (T), the first opposite surface being on the opposite side to a first facing surface of the first section (86) of the medium (T), and the first facing surface facing the first surface (841) of the platen (84).

3. The removal device (20) according to claim 1, wherein
   the second contact portion (3) includes a rotary body (6B, 7B) configured to rotate centered on a rotary shaft orthogonal to the first direction, the second direction, and the third direction.

4. The removal device (20) according to claim 3, wherein

   the second support portion (3) includes a link mechanism (6A, 7A),
   the link mechanism (6A, 7A) includes

      a first joint (61, 71), one end of the first joint (61, 71) being connected to the connecting portion (4), and
      a second joint (62, 72), one end of the second joint (62, 72) being connected to another end of the first joint (61, 71),

   the rotary body (6B, 7B) is provided at another end of the second joint (62, 72), and
   the removal device (20) further includes a rotary mechanism (51) configured to rotate the first joint (61, 71) with respect to the connecting portion (4).

5. The removal device (20) according to claim 4, further comprising:

a spring (69, 79) configured to urge the rotary body (6B, 7B) toward the platen (84).

6. The removal device (20) according to claim 4, wherein

the rotary body (6B, 7B) includes a one-way clutch, and
the one-way clutch is configured to allow the rotary body (6B, 7B) to rotate in a first rotation direction (D1) and not allow the rotary body (6B, 7B) to rotate in a second rotation direction (D2), the first rotation direction (D1) being a rotation direction in which a contact section of the rotary body (6B, 7B) with the medium (T) moves in the third direction, and the second rotation direction (D2) being opposite to the first rotation direction (D1).

7. The removal device (20) according to claim 4, wherein

the second support portion (3) includes a first shaft (33),
the rotary mechanism (51) includes

a shaft support member (51) configured to support the first shaft (33), and
a movement mechanism (5A) configured to move the shaft support member (51) in the first direction and the second direction, and

the second support portion (3) is configured to rotate around a second shaft (46) separated from the first shaft (33), as a result of the shaft support member (51) moving in the first direction and the second direction.

8. The removal device (20) according to claim 4, wherein
the rotary mechanism (51) includes a first motor (15).

9. The removal device (20) according to claim 4, further comprising:
a second motor (16) configured to rotate the second joint (62, 72) with respect to the first joint (61, 71).

10. The removal device (20) according to claim 3, wherein
the first support portion (2) includes a plate body (22A, 22B) including a third surface (220A, 220B) facing the first section (86) of the medium (T).

11. The removal device (20) according to claim 10, wherein
the third surface (220A, 220B) is inclined with respect to a direction parallel to the first surface (841).

12. The removal device (20) according to claim 10, wherein

the second contact portion (6B, 7B) is made of rubber, and
the third surface (220A, 220B) is made of rubber.

13. The removal device (20) according to claim 10, wherein

the second support portion (3) includes a link mechanism (6A, 7A),
the link mechanism (6A, 7A) includes

a first joint (61, 71), one end of the first joint (61, 71) being connected to the connecting portion (4), and
a second joint (62, 72), one end of the second joint (62, 72) being connected to another end of the first joint (61, 71),

the rotary body (6B, 7B) is provided at another end of the second joint (62, 72),
the removal device (20) further includes a rotary mechanism (51) configured to rotate the first joint (61, 71) with respect to the connecting portion (4), and
when the first joint (61, 71) is rotated by the rotary mechanism (51), a movement trajectory (U) of a connection section between the first joint (61, 71) and the second joint (62, 72) passes farther to an opposite side of the first section (86) of the medium (T) in the first direction than a virtual plane (P) extending along the third surface (220A, 220B) of the first support portion (2).

14. A print system comprising:

a platen (84);

a removal device (20) configured to remove a medium (T) from the platen (84), the removal device (20) being configured to move relative to the platen (84) in a direction close to the platen (84) and in a direction away from the platen (84), the medium (T) including a first section (86), a second section (87), and a third section (88), the first section (86) extending along a first surface (841) being an end surface of the platen (84) in a first direction, the second section (87) extending along a second surface (842) being an end surface of the platen (84) in a second direction opposite to the first direction, and the third section (88) being a section joining the first section (86) and the second section (87) and being folded back at an end portion of the platen (84) in a third direction orthogonal to the first direction and the second direction; and

a head (9A) configured to print by ejecting ink onto the medium (T) held on the platen (84), wherein the removal device (20) includes

a first support portion (2) positioned on an opposite side from the platen (84) with respect to the first section (86) of the medium (T) in the first direction,

a second support portion (3) having a second contact portion (6B, 7B),

the second contact portion (6B, 7B) being configured to move in the third direction, and coming into contact with a second opposite surface of the second section (87) of the medium (T), the second opposite surface being on the opposite side to a second facing surface of the second section (87) of the medium (T), and the second facing surface facing the second surface (842) of the platen (84), and

a connecting portion (4) positioned on the opposite side from the platen (84) with respect to the first support portion (2) and the second support portion (3) in the third direction, and being configured to connect the first support portion (2) and the second support portion (3) with each other.

15. A print system according to claim 14, further comprising:

a spring (69, 79) configured to urge a rotary body (6B, 7B) toward the platen (84), the rotary body (6B, 7B) configured to rotate centered on a rotary shaft orthogonal to the first direction, the second direction, and the third direction, wherein

the second support portion (3) includes the rotary body (6B, 7B),

the second support portion (3) includes a link mechanism (6A, 7A),

the link mechanism (6A, 7A) includes

a first joint (61, 71), one end of the first joint (61, 71) being connected to the connecting portion (4), and

a second joint (62, 72), one end of the second joint (62, 72) being connected to another end of the first joint (61, 71),

the rotary body (6B, 7B) is provided at another end of the second joint (62, 72),

the print system further includes a rotary mechanism (51) configured to rotate the first joint (61, 71) with respect to the connecting portion (4),

the rotary body (6B, 7B) includes a one-way clutch,

the one-way clutch is configured to allow the rotary body (6B, 7B) to rotate in a first rotation direction (D1) and not allow the rotary body (6B, 7B) to rotate in a second rotation direction (D2), the first rotation direction (D1) being a rotation direction in which a contact section of the rotary body (6B, 7B) with the medium (T) moves in the third direction, and the second rotation direction (D2) being opposite to the first rotation direction (D1),

the first support portion (2) includes a plate body (22A, 22B) including a third surface (220A, 220B) facing the first section (86) of the medium (T), and

the third surface (220A, 220B) is inclined with respect to a direction parallel to the first surface (841).

# FIG. 1

# FIG. 2

UP

LEFT — REAR

FRONT — RIGHT

DOWN

# FIG. 3

# FIG. 4

# FIG. 5

# FIG. 6

EP 4 530 035 A1

# FIG. 7

23

# FIG. 8

# FIG. 9

FRONT ← → REAR

UP / DOWN

# FIG. 10

# FIG. 11

# FIG. 12

# FIG. 13

# FIG. 14

# FIG. 15

Europäisches
Patentamt

European
Patent Office

Office européen
des brevets

# EUROPEAN SEARCH REPORT

**Application Number**

EP 24 19 2610

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 291 906 A (ALIBABA CHINA CO LTD) 24 August 2021 (2021-08-24) | 1,2,14 | INV. B25J15/08 |
| A | * figures 5A-6A * | 3-13,15 | B41J3/407 |
| X | KONDO HIROKAZU ET AL: "Development and Control of Robot Hand with Finger Camera for Garment Handling Tasks", 2022 IEEE/RSJ INTERNATIONAL CONFERENCE ON INTELLIGENT ROBOTS AND SYSTEMS (IROS), IEEE, 23 October 2022 (2022-10-23), pages 8940-8947, XP034257372, DOI: 10.1109/IROS47612.2022.9982134 [retrieved on 2022-12-26] | 1-4,7-13 | |
| A | * the whole document * | 5,6,14, 15 | |
| A | US 11 491 812 B1 (THAMMASOUK KHAMVONG [US] ET AL) 8 November 2022 (2022-11-08) * figures 9A-9D * | 1,14,15 | |
| A | WO 2022/165527 A1 (SOFTWEAR AUTOMATION INC [US]) 4 August 2022 (2022-08-04) | 1,14,15 | TECHNICAL FIELDS SEARCHED (IPC) B41J B25J |

The present search report has been drawn up for all claims

| Place of search | Date of completion of the search | Examiner |
|---|---|---|
| The Hague | 7 January 2025 | Curt, Denis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 2610

This annex lists the patent family members relating to the patent documents cited in  the above-mentioned European search report.
The members are as contained in the European Patent Office EDP file on
The European Patent Office is in no way liable for these particulars which are merely given for the purpose of information.

07-01-2025

| Patent document cited in search report | | Publication date | Patent family member(s) | | Publication date |
|---|---|---|---|---|---|
| CN 113291906 | A | 24-08-2021 | NONE | | |
| US 11491812 | B1 | 08-11-2022 | CN | 115535549 A | 30-12-2022 |
| | | | DE | 102022002378 A1 | 05-01-2023 |
| | | | FR | 3124762 A1 | 06-01-2023 |
| | | | IL | 294403 A | 01-01-2023 |
| | | | JP | 2023008955 A | 19-01-2023 |
| | | | KR | 20230004331 A | 06-01-2023 |
| | | | TW | 202302375 A | 16-01-2023 |
| | | | US | 11254154 B1 | 22-02-2022 |
| | | | US | 11472211 B1 | 18-10-2022 |
| | | | US | 11491812 B1 | 08-11-2022 |
| | | | WO | 2023279062 A1 | 05-01-2023 |
| WO 2022165527 | A1 | 04-08-2022 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020110874 A